# FASCICULE DE BREVET EUROPEEN

(11) **EP 2 221 250 B1**
(45) Date de publication et mention de la délivrance du brevet: **03.08.2011**
(21) Numéro de dépôt: 10152873.5
(22) Date de dépôt: 08.02.2010
(51) Int. Cl.: B64G 1/40, B64G 1/42, B64G 1/10

(54) **Engin et procédé de couplage d'un système de propulsion et d'un système de pile à combustible régénératrice**
Vorrichtung und Verfahren zum Koppeln eines Antriebssystems und einer Brennstoffzelle
Device and method for coupling a propulsion system and a fuel cell

(30) Priorité: 24.02.2009 FR 0900836
(43) Date de publication de la demande: 25.08.2010
(73) Titulaire: Thales, 92200 Neuilly Sur Seine (FR)
(72) Inventeur: Nann, Isabelle, 06150, Cannes la Bocca (FR); Iffly, Antoine, 83600, Bagnols en Forêt (FR); Lang, Martin, NL-2172JP, Sassenheim (NL)
(74) Mandataire: Esselin, Sophie

(56) Documents cités:
- WO-A-96/26108
- WO-A-99/00300
- US-B1- 6 374 618

## Description

Le domaine de l'invention concerne les engins comportant un système de stockage d'énergie de type pile à combustible régénératrice et un système de propulsion, et plus particulièrement les engins spatiaux de type satellite.

De nos jours, les satellites embarquent une multitude de systèmes électroniques pour remplir par exemple des missions d'observation ou des missions dédiées aux réseaux de communication terrestre. Ils embarquent notamment un module de communication avec le sol, un module de commande et de guidage du satellite, un module d'optoélectronique pour les missions d'observation et/ou un module pour remplir les fonctions des infrastructures de communication. Pour le fonctionnement de l'ensemble des systèmes électroniques, les satellites actuels comportent un système de stockage d'énergie de type batterie. Ils comportent également un générateur d'énergie solaire qui permet d'alimenter les systèmes électroniques du satellite lorsque celui-ci est exposé au soleil et qui permet également de recharger les batteries. Lorsque le satellite est localisé en position d'éclipse par rapport au soleil, les systèmes électroniques sont alimentés uniquement par les batteries.

Les progrès réalisés dans le domaine des piles à combustible permettent d'envisager la mise en place de tels systèmes de stockage d'énergie à bord des satellites. Les systèmes de pile à combustible régénérateurs (RFCS pour « Regenerative Fuel Cell System » en langage anglo-saxon) apportent une solution performante en autonomie, en délivrance de puissance et sont particulièrement adaptés pour les classes de satellites de télécommunication de forte puissance de fonctionnement nominal. On connaît dans l'état de la technique des engins spatiaux comportant un système de stockage d'énergie de type pile à combustible. Par exemple, le document intitulé « PEM Fuel Cell Status and Remaining Challenges for Manned Space-Flight Applications » décrit de tels systèmes. Ce document décrit des engins spatiaux habités et sont moins contraints par les problématiques d'encombrement et de miniaturisation que nous trouvons pour la conception de satellites.

Il est également connu d'utiliser les piles à combustible dans le domaine automobile. Cependant, le domaine spatial, en comparaison du domaine automobile, impose des contraintes particulières de fonctionnement des systèmes électroniques et notamment pour les fonctions d'alimentation en énergie des systèmes. On peut citer par exemple le milieu de fonctionnement sévère des systèmes électroniques, notamment en température, les contraintes de fiabilité des systèmes électroniques, ces derniers devant prouver un taux de panne extrêmement faible, des changements constants de mode d'alimentation en puissance selon que le satellite est position d'éclipse par rapport au soleil et bien sûr la contrainte d'autonomie d'énergie du satellite que ce dernier doit résoudre pour remplir des missions de longue durée dans l'espace.

Afin de mieux comprendre la problématique imposée par le domaine spatial et plus particulièrement les satellites, nous décrivons succinctement par la suite les modes opératoires d'un satellite de télécommunications. Après le lancement d'un satellite, celui-ci est placé en orbite géostationnaire après une phase de transfert pendant laquelle il réalise une succession de trajectoires elliptiques jusqu'à atteindre la trajectoire de mise à poste. On distingue donc une première phase de lancement, une seconde phase de transfert et une troisième phase en orbite géostationnaire. Pendant la phase de lancement et avant le déploiement des générateurs solaires pendant la phase de transfert, les systèmes fonctionnels du satellite sont alimentés par le système de stockage d'énergie embarqué, ce système pouvant être de type batterie ou de type pile à combustible régénératrice. Dans le cas d'une pile à combustible régénératrice ou d'une batterie, le système doit comporter un niveau de stockage d'énergie suffisant avant le lancement pour subvenir aux besoins des systèmes électroniques durant la phase de lancement et avant que les générateurs solaires soient déployés. Pendant la phase de transfert et la phase en orbite, le satellite est capable de récupérer de l'énergie au moyen d'un système de génération de puissance solaire lorsque celui-ci est bien orienté dans la direction du soleil. Les systèmes électroniques sont alors alimentés par ce dernier système lorsque le satellite est exposé au soleil et par la pile à combustible régénératrice ou la batterie dans les positions d'éclipse. Le système de génération de puissance a également pour fonction de recharger la source d'énergie secondaire (batterie ou pile à combustible régénératrice en mode électrolyseur).

Le principe de la pile à combustible est tel que la puissance solaire est utilisée pour mettre en oeuvre l'électrolyse et former à partir d'un produit le combustible et le comburant, ces deux derniers éléments étant stockés dans des réservoirs distincts et la réaction électrochimique entre ces deux éléments génère de l'énergie au moyen d'une pile. En effet, une pile à combustible n'est pas un moyen de conservation d'énergie mais un moyen de conversion d'énergie, et dans ce cas particulier de conversion de l'énergie solaire en énergie électrochimique. Par conséquent, les systèmes de type plie à combustible demandent l'implémentation de réservoirs de stockage pour le combustible, le comburant et le produit résultant de la réaction de la pile à combustible. Par exemple, pour une solution de pile à combustible les plus couramment utilisées de type H₂/O₂, les réactifs sont conservés dans un état gazeux. Cela implique la mise en place de réservoirs auxiliaires. Suivant la pression de stockage et la puissance du satellite les réservoirs peuvent devenir très volumineux. Cette contrainte a pour conséquence une augmentation de l'encombrement et de la masse du satellite pour un système dont les systèmes électroniques complexes sont déjà fortement contraints. La performance électrique des systèmes de stockage d'énergie se mesure en Wh/kg, et par conséquent l'augmentation de la masse induit une baisse de performance du satellite. Les documents US 6,374,618B1, WO99/00300 A et WO96/26108 A décrivent des systèmes conventionnels de génération d'énergie pour un engin spatial.

Un objectif de l'invention est l'amélioration des performances électriques du satellite de télécommunication en vue de fournir une solution viable pour l'adoption d'un système de stockage d'énergie de type pile à combustible dans de tel engins spatiaux.

Plus précisément, l'invention est un engin comportant un système de stockage d'énergie de type pile à combustible régénératrice, un système de propulsion chimique et un système de pressurisation des ergols de la propulsion, le système de stockage d'énergie comportant au moins trois réservoirs permettant de contenir dans un premier réservoir un combustible, dans un second réservoir le comburant et dans un troisième réservoir le produit résultant de la réaction du comburant et du combustible et le système de pressurisation comportant au moins un quatrième et un cinquième réservoir de pressurisation contenant un gaz de pressurisation.

L'engin comporte également une pluralité de moyens pour coupler les réservoirs du système de stockage d'énergie avec les réservoirs du système de pressurisation des ergols de la propulsion, ces moyens comportant des moyens pour vidanger les réservoirs de pressurisation, des moyens pour isoler le système de propulsion des réservoirs de pressurisation, des moyens pour isoler les réservoirs de pressurisation entre eux et des moyens pour raccorder, lorsque les réservoirs de pressurisation ne contiennent plus les gaz de pressurisation, le réservoir de combustible avec le quatrième réservoir et le réservoir de comburant avec le cinquième réservoir. En effet, une fois que les réservoirs de pressurisation sont devenus inutiles, les dits réservoirs peuvent être utilisés pour stocker du combustible et du comburant.

Avantageusement, les dimensions des réservoirs du système de stockage d'énergie contenant le comburant et le combustible sont inférieures aux dimensions nécessaires pour les besoins de puissance de l'engin en phase de mission à une pression donnée, les réservoirs de pressurisation pouvant servir également au système de stockage d'énergie en phase de mission. Les réservoirs ont une dimension inférieure à celle nécessaire. En effet, le système de pressurisation ne comporte pas de compresseur pour le stockage du combustible et comburant dans leur réservoir respectif et à cette pression donnée, le volume des réservoirs n'est pas suffisant pour servir à eux seuls pour le stockage du comburant et combustible nécessaire durant la phase de mission. La phase de mission correspond à la phase pendant laquelle l'ensemble des systèmes électroniques embarqués de l'engin sont en fonctionnement et consomment de la puissance. Avant la phase de mise à poste, les systèmes du satellite consomment moins de puissance. Avantageusement, l'engin comporte un système de vannes entre le système de propulsion et le système de stockage d'énergie, des premières vannes entre les réservoirs de pressurisation et le système de propulsion, des secondes vannes entre le premier réservoir et le quatrième réservoir, des troisièmes vannes entre le second réservoir et le cinquième réservoir et des quatrièmes vannes pour vidanger les réservoirs de pressurisation.

Avantageusement, les moyens pour vidanger les réservoirs de pressurisation comportent en leur sortie un moyen pour éjecter des fluides sans effet de propulsion à l'extérieur de l'engin.

Avantageusement, le système de stockage d'énergie est alimenté par un système de génération de puissance pour réaliser l'électrolyse.

L'invention s'applique avantageusement pour les engins spatiaux de type satellite selon l'un quelconque mode de réalisation cité précédemment.

L'invention a également pour objet un procédé permettant de coupler les réservoirs d'un système de stockage d'énergie de type pile à combustible régénératrice avec des réservoirs de pressurisation des ergols d'un système de propulsion principale d'un engin selon l'un quelconque mode de réalisation cité précédemment. Le procédé réalise les étapes successives suivantes :
- Dans une première étape, on contient le combustible dans le premier réservoir uniquement et le comburant dans le deuxième réservoir uniquement,
- Dans une seconde étape, on isole le système de propulsion des réservoirs de pressurisation,
- Dans une troisième étape, on vidange les réservoirs de pressurisation,
- Dans une quatrième étape, on isole les réservoirs de pressurisation les uns des autres,
- Dans une cinquième étape, on raccorde les réservoirs de pressurisation avec le premier réservoir et le deuxième réservoir du système de stockage d'énergie,
- Dans une sixième étape, le quatrième réservoir contient une partie du combustible et le cinquième réservoir contient une partie du comburant, les autres parties étant contenues dans le premier réservoir et le deuxième réservoir du système de stockage d'énergie.

Avantageusement, à la première étape, les dimensions des réservoirs contenant le comburant et le combustible sont inférieures aux dimensions nécessaires pour les besoins de puissance de l'engin en phase de mission à une pression donnée. En phase de mission d'un satellite de télécommunication, c'est-à-dire pendant la phase géostationnaire, les besoins en puissance sont les plus élevés. Avant la mise à poste, les besoins en puissance sont moindres et autorisent l'utilisation de réservoirs de comburant et de combustible de dimension plus faible. L'invention permet d'utiliser les réservoirs de pressurisation des ergols de propulsion pour contenir le combustible et comburant supplémentaire, par rapport à la phase de transfert, et nécessaire à la réalisation de la mission du satellite, les réservoirs de pressurisation étant alors inutiles pendant cette phase.

Le procédé selon l'invention s'applique particulièrement aux engins spatiaux destinés à être positionnés en orbite géostationnaire. Le positionnement en orbite est précédé d'une phase de lancement de l'engin suivie d'une phase de transfert jusqu'au positionnement en orbite géostationnaire, et avantageusement la seconde étape du procédé est déclenchée à la suite de la phase de transfert de l'engin.

L'implémentation de l'invention sur un engin permet la réduction de la masse de l'engin grâce au couplage des différents réservoirs qui permet une réduction de taille des réservoirs de combustible et de comburant de la pile à combustible régénératrice, ceux ci seraient en effet beaucoup plus volumineux sans ce couplage. Cela est particulièrement avantageux pour les engins spatiaux. Ces engins doivent en effet être propulsés dans l'Espace et requièrent une conception optimale en termes de masse. Le gain de masse impacte également les performances du système de stockage d'énergie, ces performances se mesurent en effet en Wh/kg. Ses réservoirs sont dimensionnés de façon à pouvoir fournir l'énergie suffisante aux systèmes électroniques pour subvenir à leur besoins durant la phase de lancement et avant que les générateurs solaires soient déployés.

Un avantage de l'invention est une augmentation du volume de réactifs pouvant être embarqué pour un impact faible de masse et avantageusement pour des puissances se situant aux environs de 15 kW à 25 kW. Ceci permet de répondre à plus de demande de pics de puissance de la part des charges utiles que les systèmes de batterie sont actuellement capables de réaliser. Ceci permet ainsi également de sous dimensionner les générateurs solaires.

L'invention permet d'optimiser les systèmes de stockage d'énergie par pile à combustible régénératrice embarqués dans les satellites et par conséquent de rendre plus rapide l'adoption de ces systèmes qui sont encore à l'état de faible maturité. Ces systèmes sont en effet attrayants pour les satellites dont la puissance de fonctionnement nominal est supérieure à 15kW. Ces systèmes offrent des caractéristiques de délivrance d'énergie et de réponse en pic de consommation plus performantes que les systèmes de batteries actuellement utilisés.

L'invention sera mieux comprise et d'autres avantages apparaîtront à la lecture de la description qui va suivre donnée à titre non limitatif et grâce aux figures annexées parmi lesquelles :
La figure 1 représente un schéma du couplage entre le système de stockage d'énergie de la pile à combustible et le système de propulsion chimique d'un satellite. Les autres systèmes fonctionnels du satellite ne sont pas représentés.
La figure 2 représente le procédé de couplage entre le système de stockage d'énergie de la pile à combustible et le système de propulsion chimique.
La figure 3a illustre le fonctionnement de la pile à combustible régénératrice lorsque celle-ci est en mode de décharge pour générer l'énergie des systèmes fonctionnels du satellite pendant la première étape du procédé.
La figure 3b illustre le fonctionnement de la pile à combustible régénératrice lorsque celle-ci est en mode de recharge pendant la première étape du procédé.
La figure 4a illustre le fonctionnement de la pile à combustible régénératrice lorsque celle-ci est en mode de décharge pour générer l'énergie des systèmes fonctionnels du satellite à l'étape finale du procédé. Les réservoirs de pressurisation du système de propulsion chimique sont raccordés aux réservoirs du système de stockage d'énergie.
La figure 4b illustre le fonctionnement de la pile à combustible régénératrice lorsque celle-ci est en mode recharge à l'étape finale du procédé. Les réservoirs de gaz de pressurisation du système de propulsion chimique sont raccordés aux réservoirs du système de génération d'énergie.

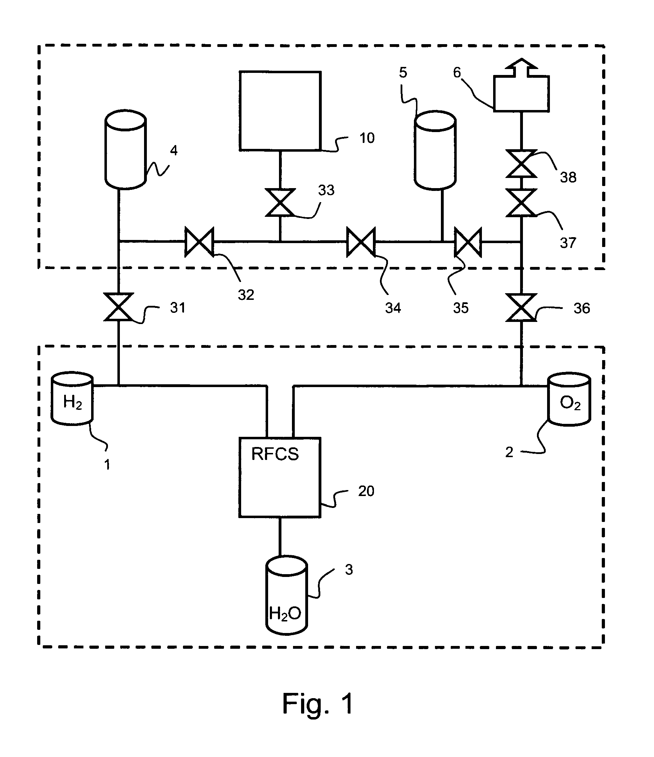

La figure 1 représente un schéma simplifié de deux systèmes fonctionnels d'un satellite, un premier système de stockage d'énergie à pile à combustible régénératrice (RFCS) et un second système de propulsion chimique.

Le système RFCS 20 a pour fonction de fournir l'énergie nécessaire aux systèmes électroniques lorsque le satellite n'est plus exposé au soleil. Pour cela, le système RFCS comporte une pile à combustible connectée à trois réservoirs de fluide. A titre d'exemple non limitatif, la pile à combustible est de type PEM (« Proton Exchange Membrane ») H₂/O₂. Un premier réservoir 1 contient un combustible à base d'hydrogène sous la forme d'un état gazeux. Un second réservoir 2 contient le comburant, ou oxydant, associé à base d'oxygène également sous la forme d'un état gazeux et le troisième réservoir 3 contient le produit résultant de la réaction dans la pile à combustible, ce produit étant de l'eau pour ce type particulier de pile à combustible. L'invention ne se limite pas à ce type de pile à combustible régénératrice et peut être appliquée pour tout autre type. Les développements spécifiques à chaque type de pile ne limitant pas la portée de l'invention. Les réservoirs de la pile à combustible régénératrice peuvent être séparés et dédiés dans un premier mode de réalisation. L'électrolyseur est dimensionné sur la puissance nécessaire en éclipse. L'électrolyse de l'eau issue d'un ou plusieurs pics de puissance de la part de la charge utile a lieu en dehors des périodes nominales de chargement.

Le système de génération de puissance et les systèmes électroniques du satellite ne sont pas représentés sur le schéma de la figure 1. En effet, l'invention ne se limite pas à une catégorie de satellite ni également d'engin. Elle s'applique à tout engin pouvant disposer de réserves non exploitées à un moment donné de son mode opératoire.

Le système de propulsion chimique comporte principalement des moyens de propulsion 10 et des réservoirs 4 et 5 permettant de pressuriser les ergols principaux des moyens de la propulsion principale. Les réservoirs de pressurisation d'un satellite peuvent être au nombre de 2 et plus. Le système de propulsion est utilisé pendant la phase de transfert pour la mise à poste du satellite sur l'orbite géostationnaire une fois le satellite séparé de son lanceur. Une fois le satellite positionné sur l'orbite géostationnaire, les réservoirs de pressurisation ne sont plus en service et peuvent être vidés soit par utilisation de la totalité du gaz soit par une action de vidange des réservoirs. Le satellite comporte pour cela un dispositif de vidange 6 pour évacuer le gaz de pressurisation des réservoirs 4 et 5 du satellite. De préférence, ce dispositif est un dispositif d'évacuation des fluides non propulsif de façon à limiter les perturbations sur le satellite.

Les éléments contenus dans les réservoirs 4 et 5 du système de propulsion sont de nature distincte des réactifs contenus dans les réservoirs 1 et 2 de la pile à combustible régénératrice. Dans un mode d'application pour satellite, les fluides provenant du système de propulsion et les fluides provenant du système de la pile à combustible régénératrice ne doivent pas être mélangés.

L'invention consiste à coupler les réservoirs de la pile à combustible régénératrice avec les réservoirs de pressurisation du système de propulsion de l'engin afin de bénéficier du volume de stockage des réservoirs de gaz pour le stockage des réactifs qui sont produits lors de l'électrolyse de la pile à combustible régénératrice. Pour cela, le satellite comporte des moyens pour vidanger les réservoirs de pressurisation du système de propulsion, des moyens pour isoler le système de propulsion de ses réservoirs de pressurisation, des moyens pour isoler les réservoirs de pressurisation entre eux et des moyens pour raccorder, lorsque les réservoirs de pressurisation sont vides, le réservoir de combustible avec le quatrième réservoir et le réservoir de comburant avec le cinquième réservoir..

Dans un mode de réalisation, l'engin comporte un système de pyrovannes 31 à 36 entre le système de propulsion et le système de stockage d'énergie RFCS. Le système de pyrovannes comporte des pyrovannes 32, 33, 34, 35 entre les réservoirs de pressurisation 4 et 5 des réservoirs d'ergols du système de propulsion et le système de propulsion 10, ces pyrovannes servant à isoler les réservoirs de pressurisation du moyen de propulsion et à isoler les réservoirs de pressurisation entre eux. Il comporte également une pyrovanne 31 entre le premier réservoir 1 et le quatrième réservoir 4 et une pyrovanne 36 entre le second réservoir 2 et le cinquième réservoir 5 permettant de raccorder, lorsque les réservoirs du système de propulsion sont vides, le réservoir de combustible 1 avec le quatrième réservoir 4 et le réservoir de comburant 2 avec le cinquième réservoir 5. Avant le couplage du réservoir de combustible et du réservoir de comburant avec les réservoirs de pressurisation respectifs, une différence de pression non négligeable peut être existante entre ces réservoirs. Pour cela, l'engin comporte des moyens de calibrage de pression entre les réservoirs devant être raccordés ensemble. Ces moyens de calibrage permettent de limiter le débit après ouverture des vannes pour le raccordement des réservoirs. Le système de pyrovannes comporte également des pyrovannes 37 et 38 permettant de vidanger les réservoirs de pressurisation 4 et 5. Les vannes décrites précédemment et représentées sur le schéma peuvent être uniques ou redondées pour assurer la fiabilité du système hydraulique et la sécurité au sol. Il est bien entendu que le système de fluides des moyens de propulsion et de la pile à combustible comporte tous les éléments nécessaires pour la mise en place d'un tel système comme par exemple des pyrovannes, des régulateurs de pression et de températures, des compresseurs qui sont connus de l'homme du métier.

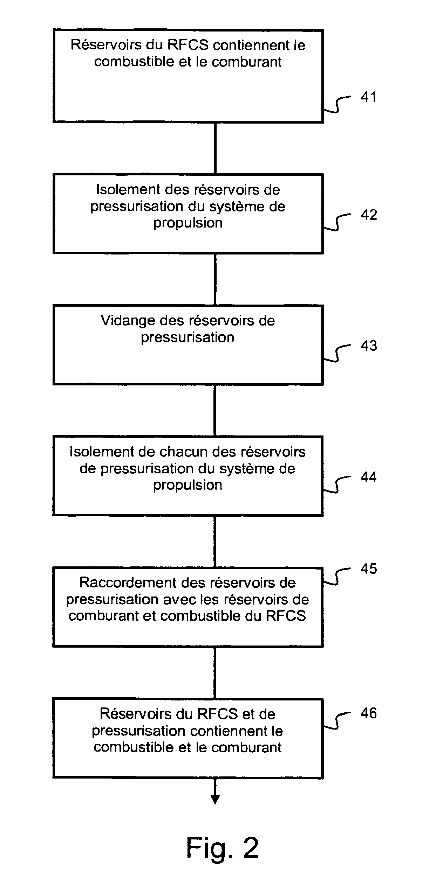

L'invention a pour objet également, comme illustré par la figure 2, le procédé de couplage des réservoirs du système de stockage d'énergie RFCS avec les réservoirs de pressurisation du système de propulsion du satellite. Avantageusement, le procédé réalise les étapes successives suivantes :
- Dans une première étape 41, on contient le combustible dans le premier réservoir 1 uniquement et le comburant dans le deuxième réservoir 2 uniquement,
- Dans une seconde étape 42, on isole le système de propulsion 10 des réservoirs de pressurisation 4 et 5,
- Dans une troisième étape 43, on vidange les réservoirs de pressurisation 4 et 5,
- Dans une quatrième étape, on isole les réservoirs de pressurisation 4 et 5 les uns des l'autres,
- Dans une cinquième étape, on raccorde les réservoirs de pressurisation 4 et 5 avec les réservoirs 1 et 2 du système de stockage d'énergie,
- Dans une sixième étape, le quatrième réservoir 4 contient une partie du combustible et le cinquième réservoir 5 contient une partie du comburant, les autres parties étant contenues dans les premier et second réservoirs 1 et 2.

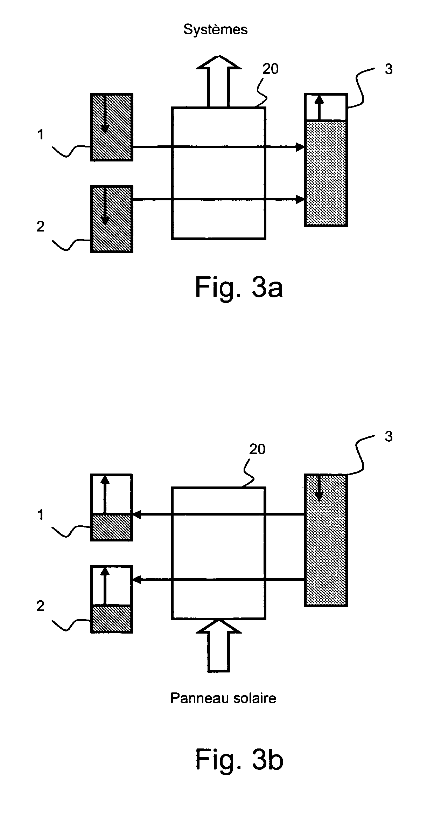

A la première étape 41, les réservoirs du système de stockage d'énergie sont dans la configuration comme illustrée par les figures 3a et 3b. Le combustible est contenu dans le premier réservoir 1, le comburant dans le second réservoir 2 et l'eau de la pile à combustible 20 est contenue dans le réservoir 3. Les réservoirs contenant le comburant et le combustible sont sous dimensionnés pour les besoins en orbite. Le premier réservoir constitue un volume V1 à une première pression, le second réservoir constitue un volume V2 à cette même pression, et le troisième réservoir constitue un volume V3. La pile à combustible régénératrice peut générer une quantité Q1 de comburant et une quantité Q2 de combustible par électrolyse d'une quantité Q3 de produit contenue dans le volume V3 à une seconde pression, la première pression étant considérée comme optimale (c'est à dire maximale) pour minimiser les volumes V1 et V2. Le volume V1 du réservoir de comburant est inférieur au volume nécessaire pour contenir à la même première pression la quantité Q1, le volume V2 du réservoir de combustible est inférieur au volume nécessaire pour contenir la quantité Q2 à la même première pression et la somme des volumes V1 et V2 des réservoirs de comburant et de combustible et du volume des réservoirs de pressurisation est au moins égale au volume nécessaire pour contenir Q1 et Q2 à une pression inférieure à la première pression. L'électrolyseur dispose des capacités de générer un volume V4 de comburant et V5 de combustible par électrolyse de la quantité Q3 de produit. Le premier réservoir 1 et le second réservoir 2 sont dimensionnés pour une pression donnée maximale et pour les besoins de puissance en phase de lancement et de transfert. Le mode de fonctionnement en électrolyse est représenté par la figure 3b. L'invention permet que le volume V1 du réservoir 1 de comburant soit inférieur au volume V4 et que le volume V2 du réservoir 2 de combustible soit inférieur au volume V5 à pression égale. En effet, les réservoirs 1 et 2 sont dimensionnés de façon à contenir le volume de gaz de dihydrogène et de dioxygène dont le système de stockage d'énergie a besoin pour la phase de lancement et la phase de transfert jusqu'à la mise à poste. Ainsi, les dimensions réduites des réservoirs de combustible et de comburant permettent de diminuer l'encombrement et la masse sur le satellite.

La figure 3a représente la pile à combustible régénératrice en mode de génération d'énergie ou de décharge, pour les systèmes électroniques du satellite. Les réservoirs 1 et 2 sont remplis et le réservoir 3 contient une quantité de produit de façon qu'il reste un volume suffisant pour contenir le volume d'eau résultant de la réaction des volumes V1 et V2 de réactifs. La proportion entre les volumes de réservoir est schématique et ne représente pas la réelle proportion de réactif et de produit nécessaire pour la pile à combustible régénératrice. En mode d'oxydation, les gaz de dihydrogène et de dioxygène réagissent dans la pile pour former de l'eau dans le réservoir 3. Il s'agit du mode de fonctionnement de la pile permettant de générer de l'énergie.

La figure 3b représente le système de stockage d'énergie en mode d'électrolyse ou recharge. Les panneaux solaires du satellite génèrent de la puissance qui est fournie à la pile à combustible régénératrice 20 pour réaliser la réaction d'électrolyse. L'eau contenue dans le réservoir 3 est transformée en dihydrogène et en dioxygène et ces derniers réactifs sont contenus dans les réservoirs 1 et 2.

Lors de la phase de lancement et de la phase de transfert, le système de stockage d'énergie du satellite fonctionne selon la configuration des systèmes telle que décrite précédemment. Une fois que le satellite est mis à poste sur l'orbite géostationnaire au moyen de manoeuvres successives avec le système de propulsion chimique, les réservoirs de pressurisation des ergols ne sont plus utilisés.

Dans cette phase, à la deuxième étape 42 les moyens de propulsion 10 sont isolés des réservoirs de pressurisation 4 et 5, la pyrovanne 33 est fermée. A la troisième étape 43, les réservoirs de gaz 4 et 5 sont vidangés. Les pyrovannes 35 et 37 sont ouvertes et le système de vidange 6 éjecte le fluide en dehors du satellite. La vidange est finalisée par la fermeture de la pyrovanne 38. A la quatrième étape 44, les réservoirs de pressurisation 4 et 5 sont isolés l'un de l'autre par la fermeture des pyrovannes 32 et 34. A la cinquième étape 45, on raccorde le réservoir de combustible avec le quatrième réservoir du moyen de propulsion, qui a été vidangé précédemment, en ouvrant la pyrovanne 31 et le réservoir de comburant avec le cinquième réservoir du moyen de propulsion, qui a été vidangé précédemment, en ouvrant la pyrovanne 36. Ainsi les produits résultant de la réaction d'électrolyse de la pile à combustible régénératrice disposent du volume supplémentaire des réservoirs initialement prévus pour le gaz de pressurisation. Des moyens de calibrage de pression existent entre la pyrovanne 36 et la pyrovanne 35, et entre la pyrovanne 31 et le réservoir de pressurisation 4.

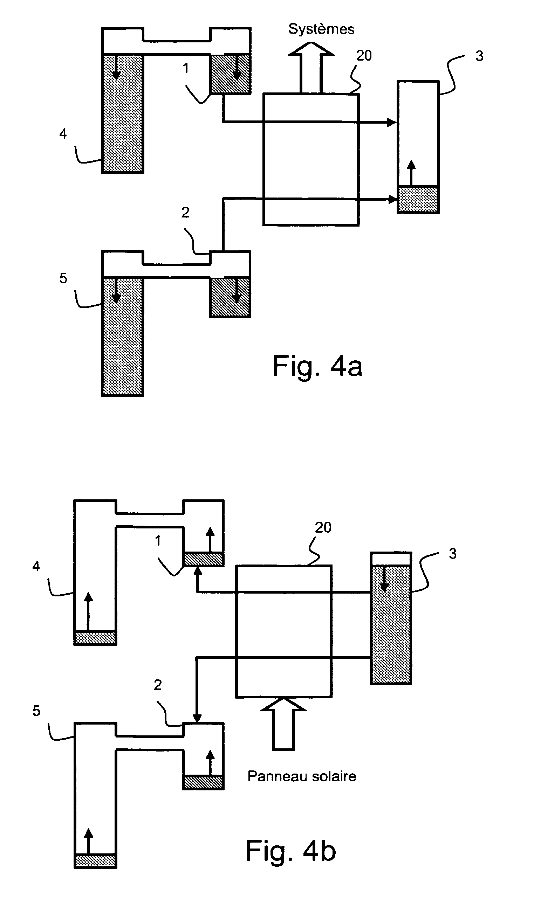

Les figures 4a et 4b illustrent la configuration des réservoirs 1, 2, 4 et 5 constituant les moyens de stockage du combustible et du comburant de la pile à combustible une fois que les réservoirs 4 et 5 initialement prévus pour la pressurisation des moyens de propulsions sont raccordés aux réservoirs 1 et 2 de la pile à combustible régénératrice. Ce mode de configuration est établi lorsque le satellite est en phase orbitale géostationnaire. Le volume constitué de la somme du volume V1 du réservoir 1 et du volume V40 du réservoir 4 est au moins égal au volume d'un réservoir fictif qu'il faudrait pour stocker le volume de combustible pouvant être généré suite à l'électrolyse de l'intégralité de l'eau contenue dans le réservoir 3 de volume V3 sachant que la pression est égale dans tous ces réservoirs. Le volume constitué de la somme du volume V2 du réservoir 2 et du volume V50 du réservoir 5 est au moins égal au volume d'un réservoir fictif qu'il faudrait pour stocker le volume de comburant pouvant être généré suite à l'électrolyse de l'intégralité de l'eau contenue dans le réservoir 3 de volume V3 sachant que la pression est égale dans tous ces réservoirs. Les volumes de combustible, de comburant et d'eau représentés sur les figures 4a et 4b sont donnés à titre indicatif et ne représentent pas les réelles quantités mises en jeux dans la réaction du système de pile à combustible.

La figure 4a représente le système de pile à combustible régénératrice 20 en mode de génération d'énergie lorsque le réservoir d'eau est pratiquement à son niveau minimum. La réaction entre le combustible et le comburant permet à la pile de générer de l'énergie électrique pour les systèmes électroniques du satellite.

La figure 4b représente le système de pile à combustible régénératrice 20 en mode de recharge d'énergie lorsque le réservoir d'eau est pratiquement à son niveau maximum. Dans ce mode de fonctionnement, la puissance nécessaire à l'électrolyse est fournie par un système de générateurs solaires. Le combustible produit par la réaction peut être stocké soit dans le réservoir 1 lorsque le satellite se trouve en phase de lancement et transfert, soit dans les réservoirs 1 et 4 quand le satellite est à poste. Le comburant produit par la réaction peut être stocké soit dans le réservoir 2 lorsque le satellite se trouve en phase de lancement et transfert, soit dans les réservoirs 2 et 5 quand le satellite est à poste. Le gain en volume par l'utilisation des réservoirs de pressurisation des moyens de propulsion permet au système de pile à combustible de générer une quantité plus importante de combustible et de comburant durant la phase d'électrolyse que ce n'est le cas avec les réservoirs 1 et 2. Par conséquent, la réserve d'énergie provenant du système de pile à combustible est plus importante pour un volume total du réservoir 1 et du réservoir 2 plus faible. Le fait de ne pas rajouter de réservoirs supplémentaires mais de coupler les réservoirs 1 et 2 aux réservoirs 4 et 5 permet un gain en performance en Wh/kg pour le système de pile à combustible régénératrice.

L'invention s'applique particulièrement aux satellites de télécommunications mais ne se limite pas à ce type d'engins spatiaux. Elle trouve également un intérêt pour tout autre engin pour lesquels il serait possible d'utiliser des réservoirs disponibles après une phase durant laquelle la demande en puissance est moins élevée. En début de vie, le satellite ne nécessite pas une puissance élevée car les systèmes dédiés à sa mission ne sont pas encore en fonctionnement. Il est donc possible d'utiliser des réservoirs pour le système de stockage d'énergie de type pile à combustible de faible dimension. Lorsque la demande en puissance devient importante, le satellite est en phase géostationnaire et les réservoirs de pressurisation des ergols de propulsion sont disponibles.

## Revendications

1. Engin comportant un système de stockage d'énergie (20) de type pile à combustible régénératrice, un système de propulsion chimique (10) et un système de pressurisation des ergols de la propulsion, le système de stockage d'énergie comportant au moins trois réservoirs permettant de contenir dans un premier réservoir (1) un combustible, dans un second réservoir (2) le comburant et dans un troisième réservoir (3) le produit résultant de la réaction du comburant et du combustible et le système de pressurisation comportant au moins un quatrième et un cinquième réservoir de pressurisation (4 et 5) contenant un gaz de pressurisation,
L'engin étant **caractérisé en ce qu'**il comporte également une pluralité de moyens pour coupler les réservoirs du système de stockage d'énergie avec les réservoirs du système de pressurisation des ergols de la propulsion, ces moyens comportant des moyens pour vidanger les réservoirs de pressurisation (4 et 5), des moyens pour isoler le système de propulsion (10) des réservoirs de pressurisation, des moyens pour isoler les réservoirs de pressurisation (4 et 5) entre eux et des moyens pour raccorder, lorsque les réservoirs de pressurisation ne contiennent plus les gaz de pressurisation, le réservoir de combustible (1) avec le quatrième réservoir (4) et le réservoir de comburant (2) avec le cinquième réservoir (5).

2. Engin selon la revendication 1, **caractérisé en ce que** les dimensions des réservoirs (1 et 2) du système de stockage d'énergie contenant le comburant et le combustible sont inférieures aux dimensions nécessaires au système de stockage d'énergie pour les besoins de puissance de l'engin en phase de mission à une pression donnée, les réservoirs de pressurisation (4 et 5) pouvant également servir au système de stockage d'énergie en phase de mission.

3. Engin selon la revendication 2, **caractérisé en ce qu'**il comporte un système de vannes entre le système de propulsion (10) et le système de stockage d'énergie (20), des premières vannes (33) entre les réservoirs de pressurisation (4 et 5) et le système de propulsion (10), des secondes vannes (31) entre le premier réservoir (1) et le quatrième réservoir (4), des troisièmes vannes (36) entre le second réservoir (2) et le cinquième réservoir (5) et des quatrièmes vannes (35, 37 et 38) pour vidanger les réservoirs de pressurisation.

4. Engin selon la revendication 3, **caractérisé en ce que** les moyens pour vidanger les réservoirs de pressurisation (4 et 5) comportent en leur sortie un moyen (6) pour éjecter des fluides sans effet de propulsion à l'extérieur de l'engin.

5. Engin selon la revendication 4, **caractérisé en ce que** le système de stockage d'énergie est alimenté par un système de génération de puissance pour réaliser l'électrolyse.

6. Engin spatial de type satellite comportant un engin selon l'une quelconque des revendications précédentes.

7. Procédé permettant de coupler les réservoirs d'un système de stockage d'énergie de type pile à combustible régénératrice avec des réservoirs de pressurisation des ergols d'un système de propulsion chimique d'un engin, le système de stockage d'énergie comportant au moins trois réservoirs permettant de contenir dans un premier réservoir un combustible, dans un second réservoir le comburant et dans un troisième réservoir le produit résultant de la réaction du comburant et du combustible et un système de pressurisation comportant au moins un quatrième et un cinquième réservoir de pressurisation contenant un gaz de pressurisation, le procédé étant **caractérisé en ce qu'**il réalise les étapes successives suivantes :
- Dans une première étape (41), on contient le combustible dans le premier réservoir (1) uniquement et le comburant dans le deuxième réservoir (2) uniquement.
- Dans une seconde étape (42), on isole le système de propulsion (10) des réservoirs de pressurisation (4 et 5),
- Dans une troisième étape (43), on vidange les réservoirs de pressurisation (4 et 5),
- Dans une quatrième étape (44), on isole les réservoirs de pressurisation les uns des autres,
- Dans une cinquième étape (45), on raccorde les réservoirs de pressurisation avec le premier réservoir et le deuxième réservoir du système de stockage d'énergie,
- Dans une sixième étape (46), le quatrième réservoir contient une partie du combustible et le cinquième réservoir contient une partie du comburant, les autres parties étant contenues dans le premier réservoir et le deuxième réservoir du système de stockage d'énergie.

8. Procédé selon la revendication 7, **caractérisé en ce qu'**à la première étape, les dimensions des réservoirs (1 et 2) contenant le comburant et le combustible sont inférieures aux dimensions nécessaires pour les besoins de puissance de l'engin en phase de mission à une pression donnée.

9. Procédé selon la revendication 8, l'engin étant un engin spatial destiné à être positionné en orbite géostationnaire, le positionnement en orbite étant précédé d'une phase de lancement de l'engin suivie d'une phase de transfert de l'engin jusqu'au positionnement en orbite géostationnaire, le procédé étant **caractérisé en ce que** la seconde étape (42) est déclenchée à la suite de la phase de transfert de l'engin.

## Claims

1. A craft comprising an energy storage system (20) of the regenerative fuel cell type, a chemical propulsion system (10) and a system for pressurising propulsion propellants, the energy storage system comprising at least three tanks, a first tank (1) for containing a fuel, a second tank (2) for containing an oxidant and a third tank (3) for containing the product resulting from the reaction between the oxidant and the fuel, and the pressurising system comprising at least one fourth and one fifth pressurising tank (4 and 5) containing a pressurising gas, the craft being **characterised in that** it further comprises a plurality of means for coupling the tanks of the energy storage system to the tanks of the system for pressurising propulsion propellants, said means comprising means for draining the pressurising tanks (4 and 5), means for isolating the propulsion system (10) from the pressurising tanks, means for isolating the pressurising tanks (4 and 5) from each other and means for connecting, when the pressurising tanks no longer contain the pressurising gases, the fuel tank (1) to the fourth tank (4) and the oxidant tank (2) to the fifth tank (5).

2. The craft according to claim 1, **characterised in that** the dimensions of the tanks (1 and 2) of the energy storage system containing the oxidant and the fuel are smaller than the dimensions necessary in the energy storage system for the power requirements of the craft during the mission phase at a given pressure, the pressurising tanks (4 and 5) also being able to serve the energy storage system during the mission phase.

3. The craft according to claim 2, **characterised in that** it comprises a system of valves between the propulsion system (10) and the energy storage system (20), first valves (33) between the pressurising tanks (4 and 5) and the propulsion system (10), second valves (31) between the first tank (1) and the fourth tank (4), third valves (36) between the second tank (2) and the fifth tank (5) and fourth valves (35, 37 and 38) for draining the pressurising tanks.

4. The craft according to claim 3, **characterised in that** the means for draining the pressurising tanks (4 and 5) comprise, at their outlets, a device (6) for ejecting fluids that do not have a propulsion effect out of the device.

5. The craft according to claim 4, **characterised in that** the energy storage system is supplied by a system for generating power in order to produce the electrolysis.

6. A spacecraft of the satellite type comprising a craft according to any one of the preceding claims.

7. A process for coupling the tanks of an energy storage system of the regenerative fuel cell type to pressurising tanks of the propellants of a chemical propulsion system of a craft, the energy storage system comprising at least three tanks, a first tank for containing a fuel, a second tank for containing an oxidant and a third tank for containing the product resulting from the reaction between the oxidant and the fuel and a pressurising system comprising at least one fourth and one fifth pressurising tank containing a pressurising gas, said process being **characterised in that** it includes the following successive steps:
- a first step (41) in which the fuel is contained in the first tank (1) only and the oxidant is contained in the second tank (2) only;
- a second step (42) in which the propulsion system (10) is isolated from the pressurising tanks (4 and 5);
- a third step (43) in which the pressurising tanks (4 and 5) are drained;
- a fourth step (44) in which the pressurising tanks are isolated from each other;
- a fifth step (45) in which the pressurising tanks are connected to the first tank and the second tank of the energy storage system;
- a sixth step (46) in which the fourth tank contains part of the fuel and the fifth tank contains part of the oxidant, the other parts being contained in the first tank and in the second tank of the energy storage system.

8. The process according to claim 7, **characterised in that** in the first step the dimensions of the tanks (1 and 2) containing the oxidant and the fuel are smaller than the dimensions necessary for the power requirements of the craft during the mission phase at a given pressure.

9. The process according to claim 8, the craft being a spacecraft designed to be positioned in a geostationary orbit, the positioning in orbit being preceded by a craft launch phase followed by a phase in which the craft is transferred to the geostationary orbit position, the process being **characterised in that** the second step (42) is started following the craft transfer phase.

## Patentansprüche

1. Flugkörper, umfassend ein Energiespeichersystem (20) des regenerativen Brennstoffzellentyps, ein chemisches Antriebssystem (10) und ein System zum Unterdrucksetzen von Antriebstreibstoff, wobei das Energiespeichersystem wenigstens drei Tanks umfasst, von denen ein erster Tank (1) einen Brennstoff aufnehmen kann, ein zweiter Tank (2) den Oxidator aufnehmen kann und ein dritter Tank (3) das Produkt aus der Reaktion zwischen dem Oxidator und dem Brennstoff aufnehmen kann, und wobei das Unterdrucksetzungssystem wenigstens einen vierten und einen fünften Drucktank (4 und 5) zur Aufnahme eines Druckgases umfasst,
wobei der Flugkörper **dadurch gekennzeichnet ist, dass** er ferner mehrere Mittel zum Koppeln der Tanks des Energiespeichersystems mit den Tanks des Systems zum Unterdrucksetzen des Antriebstreibstoffs umfasst, wobei die Mittel Folgendes umfassen: Mittel zum Entleeren der Drucktanks (4 und 5), Mittel zum Isolieren des Antriebssystems (10) von den Drucktanks, Mittel zum Isolieren der Drucktanks (4 und 5) voneinander und Mittel zum Verbinden des Brennstofftanks (1) mit dem vierten Tank (4) und des Oxidatortanks (2) mit dem fünften Tank (5), wenn die Drucktanks die Druckgase nicht mehr enthalten.

2. Flugkörper nach Anspruch 1, **dadurch gekennzeichnet, dass** die Abmessungen der den Oxidator und den Brennstoff enthaltenden Tanks (1 und 2) des Energiespeichersystems geringer sind als die Abmessungen, die in dem Energiespeichersystem für die Leistungsanforderungen des Flugkörpers während der Missionsphase bei einem gegebenen Druck erforderlich sind, wobei die Drucktanks (4 und 5) das Energiespeichersystem auch während der Missionsphase versorgen können.

3. Flugkörper nach Anspruch 2, **dadurch gekennzeichnet, dass** er ein System von Ventilen zwischen dem Antriebssystem (10) und dem Energiespeichersystem (20) umfasst, mit ersten Ventilen (33) zwischen den Drucktanks (4 und 5) und dem Antriebssystem (10), zweiten Ventilen (31) zwischen dem ersten Tank (1) und dem vierten Tank (4), dritten Ventilen (36) zwischen dem zweiten Tank (2) und dem fünften Tank (5) und vierten Ventilen (35, 37 und 38) zum Entleeren der Drucktanks.

4. Flugkörper nach Anspruch 3, **dadurch gekennzeichnet, dass** die Mittel zum Entleeren der Drucktanks (4 und 5) an ihrem Ausgang ein Mittel (6) zum Ausstoßen von Fluiden ohne Antriebseffekt aus dem Flugkörper umfassen.

5. Flugkörper nach Anspruch 4, **dadurch gekennzeichnet, dass** das Energiespeichersystem von einem System zum Erzeugen von Leistung gespeist wird, um die Elektrolyse zu erzeugen.

6. Raumfahrzeug des Satellitentyps, das einen Flugkörper nach einem der vorherigen Ansprüche umfasst.

7. Verfahren zum Koppeln der Tanks eines Energiespeichersystems des regenerativen Brennstoffzellentyps mit Drucktanks des Treibstoffs eines chemischen Antriebssystems eines Flugkörpers, wobei das Energiespeichersystem wenigstens drei Tanks umfasst, von denen ein erster Tank einen Brennstoff aufnehmen kann, ein zweiter Tank den Oxidator aufnehmen kann und ein dritter Tank das Produkt aus der Reaktion zwischen dem Oxidator und dem Brennstoff aufnehmen kann, und wobei ein Drucksystem wenigstens einen vierten und einen fünften Drucktank umfasst, der ein Druckgas aufnimmt, wobei das Verfahren **dadurch gekennzeichnet ist, dass** es die folgenden aufeinander folgenden Schritte beinhaltet:
- einen ersten Schritt (41), in dem sich der Brennstoff nur im ersten Tank (1) und der Oxidator nur im zweiten Tank (2) befindet;
- einen zweiten Schritt (42), in dem das Antriebssystem (10) von den Drucktanks (4 und 5) isoliert wird;
- einen dritten Schritt (43), in dem die Drucktanks (4 and 5) entleert werden;
- einen vierten Schritt (44), in dem die Drucktanks voneinander isoliert werden;
- einen fünften Schritt (45), in dem die Drucktanks mit dem ersten Tank und dem zweiten Tank des Energiespeichersystems verbunden werden;
- einen sechsten Schritt (46), in dem der vierte Tank einen Teil des Brennstoffs und der fünfte Tank einen Teil des Oxidators enthält, wobei die anderen Teile im ersten Tank und im zweiten Tank des Energiespeichersystems enthalten sind.

8. Verfahren nach Anspruch 7, **dadurch gekennzeichnet, dass** im ersten Schritt die Abmessungen der den Oxidator und den Brennstoff enthaltenden Tanks (1 und 2) kleiner sind als die Abmessungen, die für die Leistungsanforderungen des Flugkörpers während der Missionsphase bei einem gegebenen Druck erforderlich sind.

9. Verfahren nach Anspruch 8, wobei der Flugkörper ein Raumfahrzeug ist, das so ausgelegt ist, dass es in einem geostationären Orbit positioniert werden kann, wobei der Positionierung im Orbit eine Flugkörperabschussphase vorangeht, gefolgt von einer Phase des Transportierens des Flugkörpers in die geostationäre Orbitposition, wobei das Verfahren **dadurch gekennzeichnet ist, dass** der zweite Schritt (42) nach der Flugkörpertransportphase gestartet wird.
